(19) Europäisches Patentamt
European Patent Office
Office européen des brevets

(11) **EP 3 733 280 A1**

(12) **EUROPEAN PATENT APPLICATION**
published in accordance with Art. 153(4) EPC

(43) Date of publication:
**04.11.2020 Bulletin 2020/45**

(51) Int Cl.:
*B01J 20/32* [(2006.01)]    *B01J 20/28* [(2006.01)]
*B01J 20/18* [(2006.01)]    *B01D 53/04* [(2006.01)]

(21) Application number: **18893856.7**

(22) Date of filing: **24.12.2018**

(86) International application number:
**PCT/KR2018/016590**

(87) International publication number:
**WO 2019/132482 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.12.2017 KR 20170183959**

(71) Applicants:
• **HYUNDAI MOTOR COMPANY**
  **Seoul 06797 (KR)**
• **Korea University Research and Business Foundation**
  **Seoul 02841 (KR)**
• **Kia Motors Corporation**
  **Seoul 06797 (KR)**

(72) Inventors:
• **CHOI, Jungkyu**
  **Seoul 02874 (KR)**
• **LEE, Kwan Young**
  **Seoul 04389 (KR)**
• **JANG, Eun-Hee**
  **Seoul 02857 (KR)**
• **KIM, Chang Hwan**
  **Seongnam-si Gyeonggi-do 13526 (KR)**
• **KANG, Chun Yong**
  **Yongin-si, Gyeonggi-do 17084 (KR)**

(74) Representative: **Viering, Jentschura & Partner mbB**
**Patent- und Rechtsanwälte**
**Am Brauhaus 8**
**01099 Dresden (DE)**

(54) **HYDROCARBON ADSORBENT WITH METAL-IMPREGNATED ZEOLITE PARTICLE HAVING REGULAR MESOPORE AND MANUFACTURING METHOD THEREFOR**

(57)    The present invention relates to a hydrocarbon adsorbent with metal-impregnated zeolite particles having regular mesopores and a manufacturing method therefor. The hydrocarbon adsorbent includes a metal cation and a metal oxide that are impregnated in zeolite particles, in particular, the zeolite particles include regularly formed mesopores having a size of 2 to 10. By ad-justing a Si/Al ratio and mesoporosity of the mesopores, a hydrocarbon adsorbent may have increased adsorption capacity for hydrocarbons in a cold-start section and can rapidly oxidize the hydrocarbon upon desorption thereof, thereby reducing the discharge of exhaust gas produced in automobiles and industries.

FIG. 1

**Description**

**TECHNICAL FIELD**

Cross-reference to related applications)

This application claims priority to and the benefit of Korean Patent Application No. 10-2017-0183959 filed in the Korean Intellectual Property Office on 12/29/2017, the entire contents of which are incorporated herein by reference.
The present invention relates to a hydrocarbon adsorbent with metal-impregnated zeolite particles having regular mesopores and a manufacturing method therefor, and more particularly, to a hydrocarbon adsorbent in which metal cations and metal oxides are impregnated in zeolite particles including regularly formed mesopores of which mesoporosity can be controlled by controlling contents of water and ethanol and a Si/Al ratio in a synthetic precursor solution of the zeolite particles, and a hydrocarbon adsorption method using the hydrocarbon adsorbent.

**BACKGROUND**

As interest in air pollution increases, regulations for a vehicle's exhaust gas such as CO, NOx, HC (hydrocarbons), and PM (particulate matter) in places such as the United States and Europe are being strengthened. Among them, the HC is mostly oxidized by three-way catalysts (TWCs), and the three-way catalysts are activated at a temperature of about 200 to 300 °C or higher, and thus, in a cold start section in which the three-way catalysts are not activated, HC corresponding to 50 to 80 % of total HC emission is emitted. In order to reduce the HC emission, studies on a hydrocarbon adsorbent (HC trap) have been conducted. The hydrocarbon adsorbent is a device that adsorbs HC emitted in the cold start section and desorbs the HC when the three-way catalyst becomes activated at a temperature 200 to 300 °C.
As a hydrocarbon adsorbent, zeolite having high physical and chemical stability has been much studied. Performance of the hydrocarbon adsorbent is tested by measuring adsorption/desorption of propene and toluene, which are typical HC emission materials. Studies on the performance of the hydrocarbon adsorbent according to a zeolite structure, a Si/Al ratio, and whether or not metal impregnation is performed, have been conducted. The HC is more adsorbed as an Al content (Si/Al ratio) of zeolite increased. In addition, among various zeolite structures, ZSM-5 and beta-zeolite have the highest performance. However, when a large amount of water ($\sim$ 10 vol%) is present, performance of the hydrocarbon adsorbent is deteriorated, so many studies have been conducted to solve this problem.
Recently, a study was reported in which ZSM-5 in which copper is impregnated through an ion exchange process adsorbs propene and toluene to a high temperature of 300 °C or higher, thereby increasing performance of a hydrocarbon adsorbent (M.S. Reiter et al., Transport. Res. Part D-Transport. Environ. 43, 123-132, 2016). When an ion exchange process is performed using a larger amount of copper, it has been reported that some residual copper is present in ZSM-5 as a copper oxide (CuO) and the CuO oxidizes propene and toluene (K. Ravindra et al., Atmos. Environ. 42, 2895-2921, 2008). Particularly, it has been reported that Cu-ZSM-5 particles that have undergone copper ion exchange with ZSM-5 particles in which mesopores are introduced through dealumination and desilication have high HC trap performance. For this Cu-ZSM-5, it has been reported that there is little propene and toluene emitted since the Cu-ZSM-5 adsorbs propene and toluene up to a high temperature and then oxidizes propene and toluene being desorbed (GC Koltsakis et al., Prog. Energy Combust. Sci. 23, 1-39, 1997). However, the ZSM-5 particles in which the mesopores are introduced through the dealumination and desilication have irregular mesopores, so it is disadvantageous that the Si/Al ratio and mesoporosity thereof cannot be controlled.
Therefore, the inventors of the present invention tried to develop a hydrocarbon adsorbent that had regular mesopores and of which a Si/Al ratio and mesoporosity was able to be controlled, and as a result, confirmed that when a hydrocarbon adsorbent in which metal cations and metal oxides were impregnated by using a wet impregnation method in zeolite particles of which mesoporosity was adjusted by changing contents of ethanol and water was manufactured, hydrocarbon adsorption capacity increased in a cold-start section, and the hydrocarbon was rapidly oxidized when being detached, thereby accomplishing the present invention.

**SUMMARY OF THE INVENTION**

Technical Problem

An object of the present invention is to provide a hydrocarbon adsorbent that may have regular mesopores and of which a Si/Al ratio and mesoporosity may be adjusted.
Provided herein is a hydrocarbon adsorbent including a metal cation and a metal oxide that are impregnated in zeolite particles. The zeliote particles include regularly formed mesopores having a size of 2 to 10 nm.
The metal cation and the metal oxide may act on adsorption and oxidation of hydrocarbons, respectively.

Mesoporosity of the zeliote particles may have a mesoporous volume of 0.01 cm$^3$/g or greater, the zeolite has a Si/Al molar ratio of 10 to 200, the metal cation is present in an amount of 3 to 85 % with respect to the maximum weight that is able to be impregnated in the zeolite, and the metal oxide is present in an amount of 15 to 97 % with respect to the maximum weight that is able to be impregnated in the zeolite.

The metal cation may be selected from the group consisting of Al, Cr, Fe, Co, Ti, W, Si, Ir, Pt, Rd, Pd, Ru, Th, Ni, Cu, V, Au, Re, Zr, and Mo.

The metal oxide may be selected from the group consisting of Al, Cr, Fe, Co, Ti, W, Si, Ir, Pt, Rd, Pd, Ru, Th, Ni, Cu, V, Au, Re, Zr, and Mo.

The zeolite may be a self-pillared pentasil (SPP) zeolite.

Another object of the present invention is to provide a manufacturing method of a hydrocarbon adsorbent.

The method includes adding zeolite particles in which mesopores having a size of 2 to 10 nm are regularly formed to a metal-containing solution, and impregnating a metal cation and a metal oxide into the zeolite particles.

A synthetic precursor solution of the zeolite particles may be formed to have a molar ratio of 1 SiO$_2$:x Al$_2$O$_3$:0.3 TBPOH:y H$_2$O:2x NaOH:z EtOH (x = 0.001 to 0.1, y= 0.1 to 9, z= 0 to 3.9).

The metal cation may be selected from the group consisting of Al, Cr, Fe, Co, Ti, W, Si, Ir, Pt, Rd, Pd, Ru, Th, Ni, Cu, V, Au, Re, Zr, and Mo.

The metal oxide may be selected from the group consisting of Al, Cr, Fe, Co, Ti, W, Si, Ir, Pt, Rd, Pd, Ru, Th, Ni, Cu, V, Au, Re, Zr, and Mo.

Mesoporosity of the mesopores may be changed according to a content of ethanol and water in the synthetic precursor solution of the zeolite particles.

A molar ratio of Si:Al in the synthetic precursor solution of the zeolite particles may be 5 to 500.

Another object of the present invention is to provide a hydrocarbon adsorption method that uses the hydrocarbon adsorbent.

The hydrocarbon may be selected from the group consisting of propene, toluene, ethane, ethene, propane, benzene, xylene, ethylene, 2-methylbutane, formaldehyde, styrene, and acetaldehyde.

Technical Solution

In order to achieve the above object, the present invention provides a hydrocarbon adsorbent in which a metal cation and a metal oxide are impregnated in zeolite particles in which mesopores of 2 to 10 nm are regularly formed.

In addition, the present invention provides a manufacturing method of the hydrocarbon adsorbent in which a metal cation and a metal oxide are impregnated into zeolite particles by adding the zeolite particles in which mesopores of 2 to 10 nm are regularly formed to a metal-containing solution.

Further, the present invention provides a hydrocarbon adsorption method using the hydrocarbon adsorbent.

Advantageous Effects

Since the hydrocarbon adsorbent according to the present invention has regular mesopores and it is possible to adjust a Si/Al ratio and mesoporosity thereof, hydrocarbon adsorption capacity may increase in a cold-start section and it is possible to rapidly oxidize the hydrocarbon when the hydrocarbon is desorbed, thereby reducing emission of exhaust gas generated in vehicles and industries.

**BRIEF DESCRIPTION OF THE DRAWINGS**

FIG. 1 illustrates a schematic diagram of SPP zeolite in which Cu is impregnated according to an exemplary embodiment of the present invention.

FIG. 2 illustrates a scanning electron microscope (SEM) image of SPP particles according to an amount of ethanol and deionized water in an SPP particle synthesis precursor solution of the present invention.

FIG. 3 illustrates a transmission electron microscope (TEM) image of SPP particles according to an amount of ethanol and deionized water in an SPP particle synthesis precursor solution of the present invention.

FIG. 4 illustrates an observed X-ray diffraction (XRD) pattern of SPP particles according to an amount of ethanol and deionized water in an SPP particle synthesis precursor solution of the present invention.

FIG. 5 illustrates an observed N2 physical adsorption isotherm and pore size distribution of Na-type SPP particles of the present invention.

FIG. 6 illustrates a scanning electron microscope (SEM) image of H-type SPP particles and Cu-impregnated SPP particles of the present invention.

FIG. 7 illustrates a low magnification transmission electron microscope (TEM) image of H-type SPP particles and Cu-impregnated SPP particles of the present invention (wherein white arrows indicate CuO of 5 nm and black arrows indicate CuO of 20 nm).

FIG. 8 illustrates a high-angle annular dark-field scanning transmission electron microscope (high-angle annular dark-field scanning transmission electron microscopy (HAADF-STEM)) image of Cu-impregnated SPP particles of the present invention and an element mapping result of Cu and Al.

FIG. 9 illustrates a scanning electron microscopy/energy dispersive X-ray spectroscopy (SEM/EDS) mapping result of Cu-impregnated SPP particles of the present invention (wherein a green dot indicates Si and a red dot indicates Cu).

FIG. 10 illustrates an observed X-ray diffraction (XRD) pattern of H-type SPP particles and Cu-impregnated SPP particles of the present invention.

FIG. 11 illustrates an observed N2 physical adsorption isotherm and pore size distribution of H-type SPP particles and Cu-impregnated SPP particles of the present invention.

FIG. 12 illustrates a result of performing cold-start tests (CST) of H-type SPP particles and Cu-impregnated SPP particles of the present invention.

FIG. 13 illustrates a mass spectrum (MS) of measuring a by-product generated from H-type SPP particles and Cu-impregnated SPP particles of the present invention during a hydrocarbon adsorbent (HC trap) test with a mass spectrometer.

FIG. 14 illustrates a result of measuring coke formation of H-type SPP particles and Cu-impregnated SPP particles of the present invention with a thermogravimetric analyzer (TGA).

FIG. 15 illustrates a result of performing a continuous test of the present invention and cold-start tests (CST) of hydrothermally-treated Cu-impregnated SPP particles.

FIG. 16 illustrates a mass spectrum (MS) of measuring a by-product generated from Cu-impregnated SPP particles in a continuous cold start test with a mass spectrometer.

FIG. 17 illustrates a result of measuring coke formation of Cu-impregnated SPP particles with a thermogravimetric analyzer after a cold start test.

FIG. 18 illustrates a transmission electron microscope (TEM) image of hydrothermally-treated Cu-impregnated SPP particles.

FIG. 19 illustrates an X-ray diffraction (XRD) pattern of hydrothermally-treated Cu-impregnated SPP particles and $\alpha$-cristobalite.

## DETAILED DESCRIPTION

It was confirmed that in the present invention, a hydrocarbon adsorbent was manufactured using a manufacturing method of a hydrocarbon adsorbent that may have regular mesopores and of which a Si/Al ratio and mesoporosity may be adjusted, then a metal cation and a metal oxide were impregnated in the adsorbent, and as a result, in the presence of 10 vol% of water, adsorption capacity of hydrocarbon increased in a cold start section and it was possible to rapidly oxidize the hydrocarbon when the hydrocarbon was desorbed. It was confirmed that the metal cation played a role in improving hydrocarbon adsorption and the metal oxide played a role in hydrocarbon oxidation.

Therefore, in one aspect, the present invention relates to a hydrocarbon adsorbent in which a metal cation and a metal oxide are impregnated in zeolite particles. The zeolite particles include regularly formed mesopores having a size of 2 to 10 nm.

The term "regularly positioned" or "regularly formed" as used herein refers to being positioned within, or formed in substantially normal, predictable and/or fixed intervals such that the occurrence of the regularly positioned or regularly formed objects may be according specific orders and be substantially uniform. For example, the "regularly formed mesopores" are formed in a porous material at substantially normal, predictable and/or fixed intervals or distances to each other, so the mesoporous material can have uniform density or porosity throughout.

In the present invention, the metal cation plays a role in improving hydrocarbon adsorption and the metal oxide plays a role in hydrocarbon oxidation, so that adsorption and oxidation performance may be improved.

In the present invention, the mesoporosity may have a mesoporous volume of 0.01 cm$^3$/g or greater, the zeolite may have a Si/Al molar ratio of 10 to 200, the metal cation may be present in an amount of 3 to 85 wt% with respect to a maximum weight thereof that may be impregnated in the zeolite, and the metal oxide may be present in an amount of 15 to 97 wt% with respect to a maximum weight thereof that may be impregnated in the zeolite, and preferably, a volume of the mesopore may be 0.1 cm$^3$/g or greater, the zeolite may have a Si/Al molar ratio of 20 to 80, the metal cation may be present in an amount of 25 to 40 wt% with respect to a maximum weight thereof that may be impregnated in the zeolite, and the metal oxide may be present in an amount of 65 to 75 wt% with respect to a maximum weight thereof that may be impregnated in the zeolite.

In the present invention, the metal cation may be selected from the group consisting of Al, Cr, Fe, Co, Ti, W, Si, Ir, Pt, Rd, Pd, Ru, Th, Ni, Cu, V, Au, Re, Zr, and Mo, and preferably, may be a cation of Fe(I), Fe(II), Fe(III), Co(I), Co(II), Ni(I), Ni(II), Cu(I), or Cu(II).

In the present invention, the metal oxide may be selected from the group consisting of Al, Cr, Fe, Co, Ti, W, Si, Ir, Pt, Rd, Pd, Ru, Th, Ni, Cu, V, Au, Re, Zr, and Mo, and preferably, may be FeO, $Fe_3O_4$, $Fe_2O_3$, $Co_3O_4$, CoO, NiO, $Cu_2O$, $Cu_2O_3$, or CuO.

In the present invention, the zeolite may be a self-pillared pentasil (SPP) zeolite.

In an exemplary embodiment of the present invention, as a result of observing change in a surface shape of SPP particles according to a molar composition of ethanol and water, it was confirmed that an SPP structure was changed according to removal of the ethanol and water.

In another aspect, the present invention provides a manufacturing method of a hydrocarbon adsorbent, including adding zeolite particles in which mesopores of 2 to 10 nm are regularly formed to a metal-containing solution, and impregnating a metal cation and a metal oxide into the zeolite particles.

In the present invention, a synthetic precursor solution of the zeolite particles may be formed to have a molar ratio of 1 $SiO_2$:x $Al_2O_3$:0.3 TBPOH:y $H_2O$:2x NaOH:z EtOH (x = 0.001-0.1, y = 0.1-9, z = 0-3.9), and preferably, may be formed to have a molar ratio of x = 0.01-0.02, y = 4-6, z = 0~1.

In the present invention, the metal cation may be selected from the group consisting of Al, Cr, Fe, Co, Ti, W, Si, Ir, Pt, Rd, Pd, Ru, Th, Ni, Cu, V, Au, Re, Zr, and Mo, and preferably, may be a cation of Fe(I), Fe(II), Fe(III), Co(I), Co(II), Ni(I), Ni(II), Cu(I), or Cu(II).

In the present invention, the metal oxide may be selected from the group consisting of Al, Cr, Fe, Co, Ti, W, Si, Ir, Pt, Rd, Pd, Ru, Th, Ni, Cu, V, Au, Re, Zr, and Mo, and preferably, may be FeO, $Fe_3O_4$, $Fe_2O_3$, $Co_3O_4$, CoO, NiO, $Cu_2O$, $Cu_2O_3$, or CuO.

In the present invention, mesoporosity may be changed according to contents of ethanol and water in the synthetic precursor solution of the zeolite particles.

In the present invention, a molar ratio of Si:Al in the synthetic precursor solution of the zeolite particles may be 5 to 500, and preferably, may be 20 to 50.

In another aspect, the present invention relates to a hydrocarbon adsorption method using the hydrocarbon adsorbent.

In the present invention, the hydrocarbon may be selected from the group consisting of propene, toluene, ethane, ethene, propane, benzene, xylene, ethylene, 2-methylbutane, formaldehyde, styrene, and acetaldehyde, but is not limited thereto.

In the present invention, the hydrocarbon may include all of volatile organic compounds that are generated in a manufacturing and storage process of petrochemical refinery paint coating plants, vehicle exhaust gases, building materials such as paints or adhesives, and storage tanks of gas stations.

In another exemplary embodiment of the present invention, it was observed that in a case of SPP zeolite in which copper was not impregnated, propene could not be adsorbed, and in a case of toluene, most of an adsorbed amount was desorbed after adsorption at a temperature of about 140 °C for 6 minutes. It was observed that in a case of SPP zeolite supporting 5 wt% of copper, an amount of adsorption of propene rapidly increased, the propene was adsorbed at a temperature of about 90 °C for 5 minutes and then desorbed, and some thereof was emitted, and an amount of adsorption of toluene slightly increased, the toluene was adsorbed at a temperature of about 190 °C for 7 minutes and then desorbed, and some thereof was emitted. In this case, it was observed that propene and toluene, which were not emitted, were oxidized by CuO to be converted into carbon dioxide and carbon monoxide.

Particularly, it was confirmed that the adsorbed propene increased in proportion to an amount of $Cu^{2+}$ ions. Cu/M_30 had a greatest adsorption amount, and Cu/L_100 had the least adsorption amount. It was confirmed that most of $Cu^{2+}$ ions adsorbing propene and toluene by a structure of SPP zeolite were present on an outer surface thereof, and CuO for oxidizing was also present on a surface thereof.

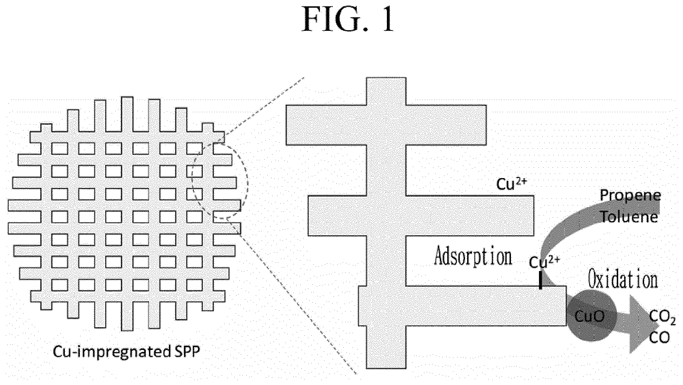

Therefore, it can be seen that $Cu^{2+}$ ions first adsorbed propene and toluene, and when they were desorbed, some of propene and toluene desorbed by surrounding CuO were easily oxidized (FIG. 1). That is, it was confirmed that performance of the hydrocarbon adsorbent was improved by a lattice structure of SPP zeolite.

In the present invention, an adsorption capacity of propene and toluene of zeolite increases with an increase of a surface area and acid. When propene and vapor are simultaneously adsorbed to the H-type ZSM-5 zeolite, the propene and vapor compete for occupation of an adsorption site. Propene is strongly and chemically adsorbed to Cu-ZSM-5, of which chemical adsorption is significantly increased compared to that of H-ZSM-5 (M. Navlani-Garcia et al., Environ. Sci. Technol. 47, 5851-5857, 2013; H.W. Jen et al., Catal. Lett. 26, 217-225, 1994). According to molecular simulation studies on adsorption of propene and toluene in Cu-ZSM-5 considering competitive adsorption of vapor, it was confirmed that propene was mainly located at $Cu^{2+}$ ions present inside ZSM-5 (B. Puertolas et al., Chem. Commun. 48, 6571-6573, 2012). Particularly, among $Cu^{2+}$ ions combined with a ZSM-5 framework, $Cu^{2+}$ ions, which replace protons in a Bronsted acid (B acid), play a decisive role in increasing adsorption affinity of propene (DJ Parrillo et al., J. Catal. 142, 708-718, 1993).

In another exemplary embodiment of the present invention, as a result of performing a hydrothermal stability test of Cu-impregnated SPP zeolite, it was confirmed that most of the hydrothermally-treated Cu-impregnated SPPs were converted into other structures. Therefore, it can be seen that no adsorption of propene and toluene occurs.

However, it was observed that propene and toluene were completely oxidized at a higher temperature (450 to 530 °C or greater) than the existing Cu-impregnated SPP particles by the remaining CuO. In a case of Cu/H_100, it was confirmed that some SPP structures thereof remained. Since the structural conversion was activated by Na, it can be seen that an amount of remaining Na was the least in H_100. This was because, when the H_100 having the greatest mesoporosity was exchanged from $Na^+$ to $H^+$, ion exchange was more easily caused by many mesopores.

Hereinafter, examples of the present invention will be described in more detail. These examples are only for illustrating the present invention, it will be apparent to those skilled in the art that the scope of the present invention is not to be construed as limited by these examples.

## Example 1 Synthesis of SPP particles

To synthesize SPP particles, an SPP particle synthesis precursor solution was prepared.

To prepare the SPP particle synthesis precursor solution, while adding and stirring aluminum isopropoxide (98 %, Alfa Aesar) to tetraethyl orthosilicate (TEOS, 98 %, Sigma-Aldrich), tetrabutylphosphonium hydroxide (TBPOH, 40 %, Alfa Aesar) was added drop by drop to the above mixture. For convenience, the precursor solution is referred to as Compound A. Sodium hydroxide (NaOH, 98 %, Sigma-Aldrich) was added to deionized water, and the NaOH solution was added to Compound A prepared above to prepare a final synthetic precursor solution. Then, the final synthetic precursor solution was sealed in a polypropylene bottle and further hydrolyzed at least overnight.

To obtain samples with different Si/Al ratios, a final composition of the synthetic precursor solution was 1 $SiO_2$:x $Al_2O_3$:0.3 TBPOH: 10 $H_2O$:2x NaOH:4 EtOH (wherein x = 0.005, 0.01, or 0.0167).

## Example 2 Mesoporosity analysis according to ethanol and water content in synthesis of SPP particles

In order to analyze the mesoporosity according to an amount of ethanol and deionized water in the SPP particle synthesis precursor solution, the synthetic precursor solution after the hydrolysis step of Example 1 was transferred to a cap-free 45 mL Teflon liner, and while stirring it at room temperature, a certain amount of ethanol and water was evaporated.

A molar composition after ethanol removal along with the molar composition mentioned above was 1 $SiO_2$:x $Al_2O_3$:0.3 TBPOH:10 $H_2O$:2x NaOH:0 EtOH, and a molar composition after removing half the amount of ethanol and half the amount of water was 1 $SiO_2$:x $Al_2O_3$:0.3 TBPOH:5 $H_2O$:2x NaOH:0 EtOH.

The produced solid product was recovered by repeating centrifugation, decanting, and deionized water washing 5 times. Thereafter, it was dried at a temperature of 70 °C overnight, and calcined at a temperature of 550 °C for 12 hours at a heating speed of 1 °C/min under a flow of 200 mL/min.

Samples obtained after (1) no evaporation, (2) ethanol evaporation, and (3) additional water evaporation were labeled as $\alpha$_E1_W1.0, $\alpha$_E0_W1.0, and $\alpha$_E0_W0.5, respectively. $\alpha$ represents the Si/Al ratio, and the numbers next to E and W represent the ratio of ethanol and water with respect to the existing precursor solution.

In order to observe the effect of the molar composition of the synthetic precursor solution on particle synthesis, the scanning electron microscopy (SEM) images of 100_E1_W1.0, 100_E0_W1.0, 100_E0_W0.5, 50_E1_W1.0, 50_E0_W1.0, 50_E0_W0.5, 30_E1_W1.0, 30_E0_W1.0, and 30_E0_W0.5 obtained by the above manufacturing method, which were 9 types of SPP particles, were observed by using a Hitachi S-4800 field emission scanning microscope (FE-SEM).

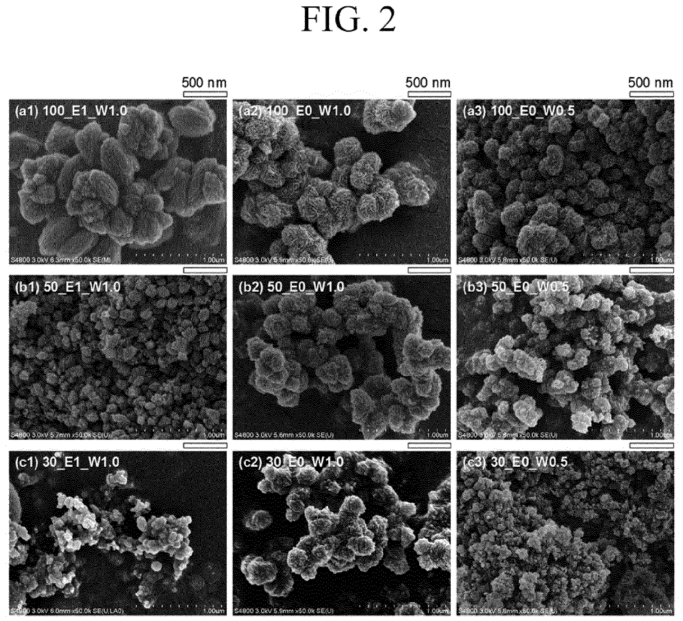

As a result, the 100_E1_W1.0 particles had a size of 400 to 600 nm and surfaces that were rather unsmooth and uneven (FIG. 2 (a1)). Each particle of 100_E0_W1.0 obtained after the ethanol removal was mainly formed of a thinner or sharper nanosheet, and the particle size was reduced (FIG. 2 (a2)). The 100_E0_W0.5 sample synthesized after the addition water removal was formed of a sharp nanosheet similar to 100_E0_W1.0, and its size was further reduced (FIG. 2 (a3)).

Therefore, it can be seen that the amounts of ethanol (produced by hydrolysis of TEOS) and water in the synthetic precursor solution affected the synthesis of SPP particles.

## Example 3 Effect of Si/Al ratio in the synthesis of SPP particles

In order to confirm the change of SPP particles according to the Si/Al ratio of the synthetic precursor solution together with the change of ethanol and moisture content, the transmission electron microscopy (TEM) images were observed using a Tecnai G2 F30ST field emission transmission electron microscope (FE-TEM).

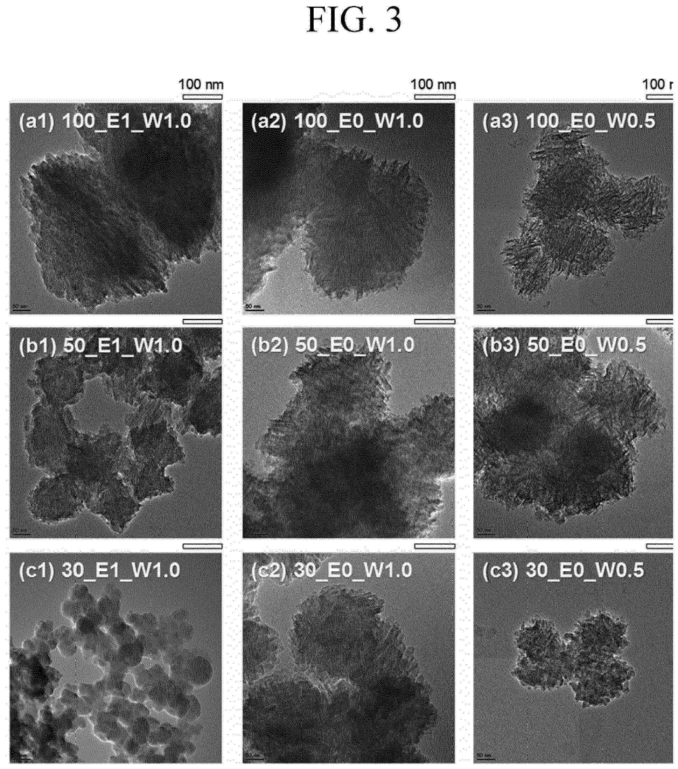

As a result, 100_E1_W1.0 was mainly formed of a thick nanosheet (FIG. 3 (a1)), but after the ethanol evaporation, 100_E0_W1.0 was formed of a sharp MFI nanosheet or lamella with a significantly reduced thickness (FIG. 3 (a2)). As shown in FIG. 2 (a2) and (a3), when water was further removed, it was confirmed that both the particle size and the thickness of the nanosheet size were decreased (FIG. 3 (a2) and (a3)).

In the case of samples synthesized with the Si/Al ratios of 50 and 30, it was confirmed that all the particles except 30_E1_W1.0 were composed of nanosheets (FIG. 3 (c1)). Both the 50_Ex_Wy sample and the 100_Ex_Wy sample monotonically increased with the removal of ethanol and ethanol/water (FIG. 3 (b2) and (b3)). When the Si/Al ratio was decreased to 30, thicker nanosheets were formed (FIG. 3 (c2) and (c3)). 30_E1_W1.0 was composed of smooth, small spherical particles (FIG. 3 (c1)).

Therefore, it can be seen that 30_E1_W1.0 was subject to a formation of a different step from the MFI zeolite step.

In addition, as a result of analyzing the SEM image and the TEM image in combination, it was confirmed that self-pillaring occurred when no ethanol was generated due to hydrolysis of TEOS.

**Example 4 Confirmation of crystallinity of SPP particles**

To confirm the crystallinity of the SPP particles, the X-ray diffraction (XRD) analysis was performed on the SPP particles obtained in Example 1. The XRD analysis was analyzed by a corresponding crystallographic information file (CIF) by using Mercury software (version 3.8, available on the Cambridge Crystallographic Data Center website), after obtaining the X-ray diffraction (XRD) pattern of the zeolite sample calcined based on Cu $K_\alpha$ ray (40 kV, 100 mA, $\lambda$ = 1.54 A) by using a Rigaku model D/MAX-2500V/PC equipped with a RINT2000 vertical goniometer. All three CIF files were provided by Material Studio 7.0 (Accelrys).

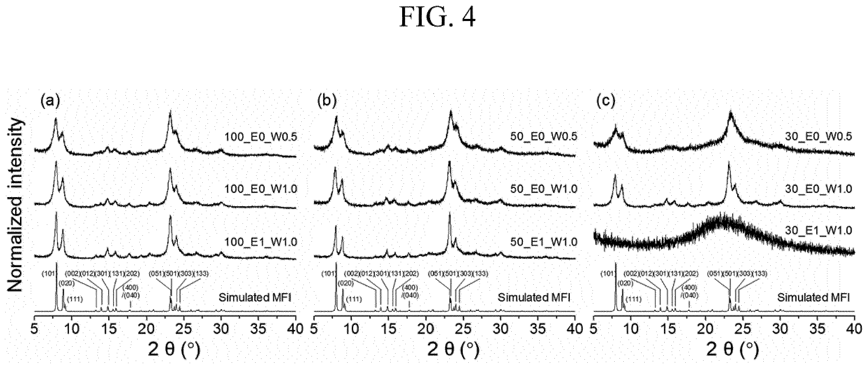

As a result, the XRD pattern of all samples showed a representative peak corresponding to the MFI structure except for the amorphous 30_E1_W1.0. However, although the crystallinity of the SPP particles was confirmed, some XRD peaks did not appear. Particularly, the XRD peak corresponding to the (hkl) plane was weakened, but the peak corresponding to the (h01) or (0k0) plane appeared (FIG. 4). This may be because the nanosheets in the SPP were many on the ac-plane, or the sample holders were extensively aligned on the ac-plane during measurement. In addition, the XRD pattern consisting of a specific peak corresponding to the (h01) or (0k0) plane means that a thin layer of MFI nanosheet was formed along the b axis (H. Kim et al., Catal. Tod. In press, 2017).

Therefore, it can be seen that ethanol was involved in the crystal growth of the b-axis in the formation of SPP particles, and it was confirmed that when the ethanol was removed, since the thickness of the nanosheet was reduced, the SPP particles having a thin nanosheet were formed.

**Example 5 Analysis of pore structure of SPP particles**

To analyze the pore structure of SPP particles, an N2 physical adsorption isotherm was measured at 77K by using a Micromeritics ASAP2020 system. The pore size and volume were calculated based on the Barrett-Joyner-Halenda (BJH) method provided by the manufacturer.

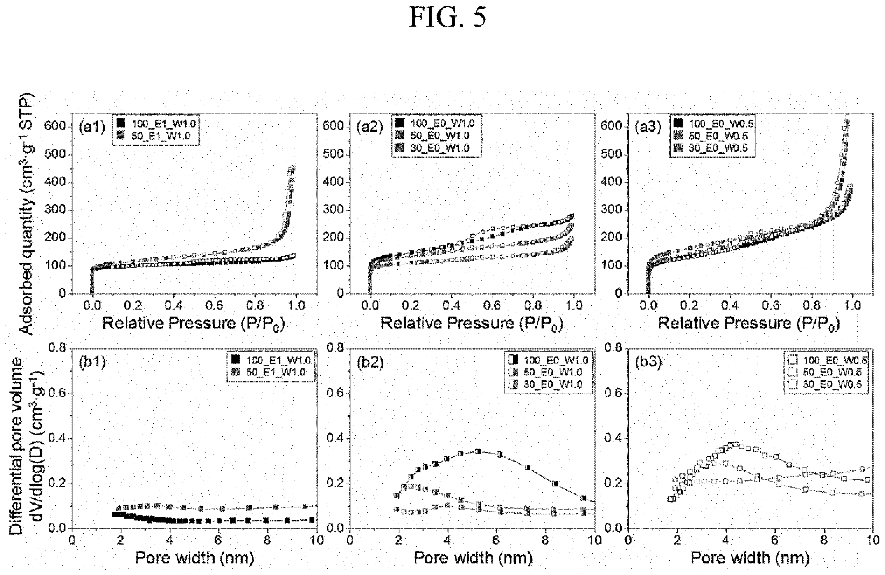

As a result, it was confirmed that regardless of the Si/Al ratio in the relative pressure range of 0.4 to 0.8, the removal of ethanol and the removal of additional water in the synthetic precursor solution increased mesoporosity (FIG. 5 (a1), (a2), and (a3)). In addition, regardless of the Si/Al ratio even in the BJH pore size distribution, it was confirmed that the removal of ethanol and the removal of additional water in the synthetic precursor solution increased the mesoporous area (FIG. 5 (b1), (b2), and (b3)).

Intermediate pores were formed in the SPP particles between self-pillared MFI nanosheets or lamellae. Therefore, it can be seen that the generated SPP particles, particularly the mesopores in the 2 to 10 nm range, were caused by a decrease in the thickness of the plate-like nanosheets and an increase in the gap between the nanosheets.

In addition, it was confirmed that the SPP particles having a high Si/Al ratio had stronger mesoporosity after removing the ethanol and ethanol/water contents from the synthetic precursor solution (FIG. 5 (b2) and (b3)). This was because the SPP particles with a lower Si/Al ratio (50 or 30) had thicker or chopped nanosheets.

In addition, in order to measure the surface area of each sample in a different scale, the Brunauer-Emmett-Teller (BET) surface area analysis and the modified t-plot method were used.

Smeso+ext and $V_{micro}$ were measured by using the modified t-plot method, and $S_{micro}$ was calculated by using the following formula.

$$S_{micro} = S_{BET} - S_{meso+ext}$$

In addition, $V_{2-10}$ was calculated by using the BJH pore size distribution in the 2 to 10 nm range.

As a result, the surface area and pore volume calculated from the $N_2$ physical adsorption isotherm were confirmed to increase the mesopores after removing the ethanol and ethanol/water contents (Table 1).

Table 1 below shows the pore volume of the calcined SPP sample calculated from the N2 physical adsorption isotherm at 77K ("a" represents Smeso+ext and $V_{micro}$ measured by using the modified t-plot method, and "b" represents the BJH pore size distribution data).

Table 1

| Sample | $S_{BET}$ (m²/g) | $S_{micro}$ (m²/g)a | $S_{meso+ext}$ (m²/g)a | $V_{micro}$ (cm³/g)a | $V_{2-10}$ (cm³/g)b |
|---|---|---|---|---|---|
| 100_E1_W1.0 | 387 ± 0.2 | 338 | 49.2 | 0.137 | 0.028 |
| 100_E0_W1.0 | 535 ± 2.1 | 375 | 160 | 0.112 | 0.169 |
| 100_E0_W0.5 | 481 ± 0.4 | 150 | 331 | 0.065 | 0.195 |
| 50_E1_W1.0 | 422 ± 1.1 | 306 | 116 | 0.102 | 0.056 |
| 50_E0_W1.0 | 494 ± 0.7 | 309 | 184 | 0.103 | 0.084 |
| 50_E0_W0.5 | 582 ± 1.2 | 232 | 350 | 0.097 | 0.147 |
| 30_E0_W1.0 | 415 ± 0.3 | 301 | 115 | 0.103 | 0.047 |
| 30_E0_W0.5 | 515 ± 0.2 | 284 | 231 | 0.070 | 0.128 |

**Example 6 Synthesis of H-type SPP particles and Cu-impregnated SPP particles**

To synthesize the H-type SPP particles, among the nine types of Na-type SPP particles calcined in Example 1, 100_E1_W1.0, 100_E0_W0.5, and 30_E0_W0.5 were stirred in a 1 M ammonium nitrate (NH4NO3) solution for 6 hours at a temperature under 80 °C at a fixed ratio of 0.01 M of the Na-type SPP particles (g)/$NH_4NO_3$ solution (mL) to obtain an ion exchanged sample. The obtained sample was recovered by repeating centrifugation, decanting, and deionized water washing three times. The recovered sample was dried overnight at a temperature of 70 °C, and calcined at a temperature of 500 °C for 6 hours at a heating speed of 10 °C/min under an air flow of 200 mL/min.

As a result, the obtained particles were indicated as L_100, H_100, and M_30. The letters H, M, and L respectively mean high, medium, and low mesoporosity in the generated particles, and the number at the end thereof represents the Si/Al ratio.

In order to manufacture the Cu-impregnated SPP particles, Cu was impregnated into the H-type SPP particles by using a wetness impregnation method. Specifically, copper nitrate trihydrate (($Cu(NO_3)_2·3H_2O$, 98 %, Sigma-Aldrich) was dissolved in deionized water to manufacture a solution of 0.04 M copper(II) nitrate ($Cu(NO_3)_2$). The H-type SPP particles were added to the copper nitrate solution so that 5 wt% of Cu was finally impregnated. Thereafter, the mixture was put in a rotary evaporator, and after removing all moisture, the Cu-impregnated SPP was recovered, dried at a temperature of 100 °C for 3 hours, and calcined at a temperature of 550 °C for 6 hours at a heating rate of 1 °C/min under a flow of 200 mL/min.

As a result, the obtained particles were indicated as Cu/L_100, Cu/H_100, and Cu/M_30. Here, Cu means that copper was impregnated in the H-type SPP particles (L_100, H_100, and M_30).

**Example 7 Physical properties of H-type SPP particles and Cu-impregnated SPP particles**

To observe the H-type SPP particles and the Cu-impregnated SPP particles, the scanning electron microscope (SEM) images and transmission electron microscopy (TEM) images were observed by using the Hitachi S-4800 field emission scanning microscope (FE-SEM) and the Tecnai G2 F30ST field emission transmission electron microscope (FE-TEM).

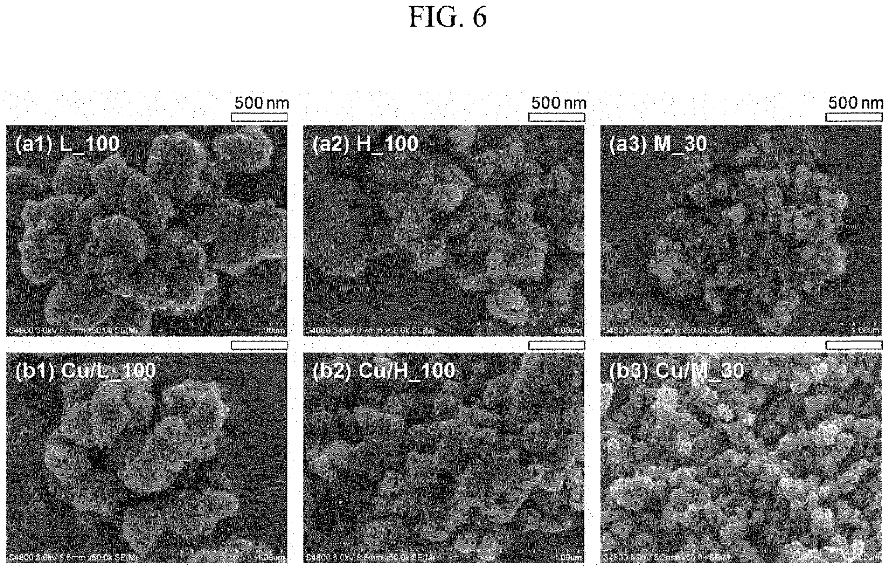

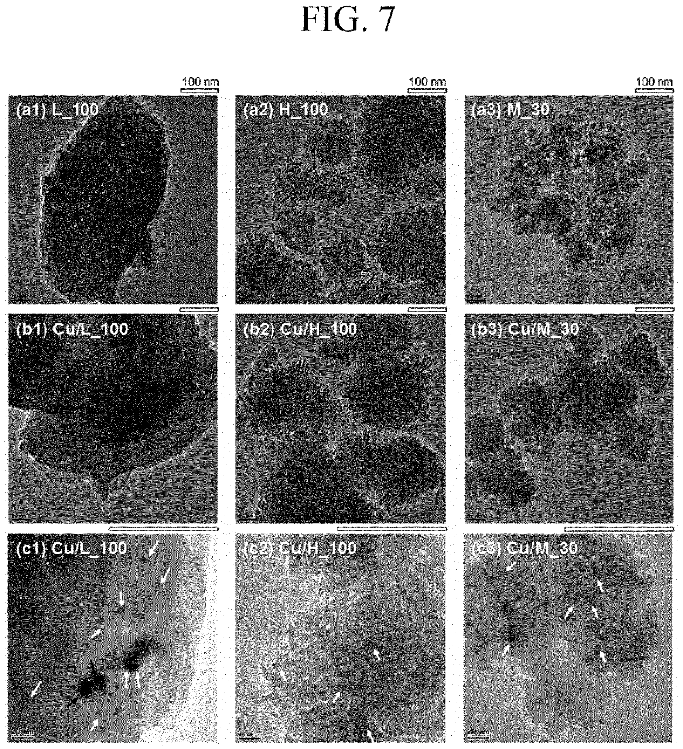

As a result, it was confirmed that the shapes of the H-type SPP particles and Cu-impregnated SPP particles were similar to that of the Na-type SPP particles (FIGS. 6 and 7).

In addition, elemental analysis and SEM/EDX mapping of energy dispersive X-ray spectroscopy (EDX) data obtained by using the Hitachi SU-70 field emission scanning electron microscope were performed.

As a result, the Si/Al ratio of the H-type and Cu-impregnated SPP particles was similar to the Si/Al ratio of the Na-type particles, except for L_100 and Cu/L_100 (Table 2 and Table 3). In the case of L_100 and Cu/L_100, the standard deviation value is high compared to the average value, so that it is difficult to obtain an accurate Si/Al ratio value.

Since the Na/Al ratio of the H-type particles had a value close to 0, it can be seen that Na+ ions were completely exchanged for H+ ions. Regarding Cu wt%, Cu wt% of all Cu-impregnated SPPs were 3 to 4 wt% that was smaller than the typical value of 5 wt% (Table 2 and Table 3).

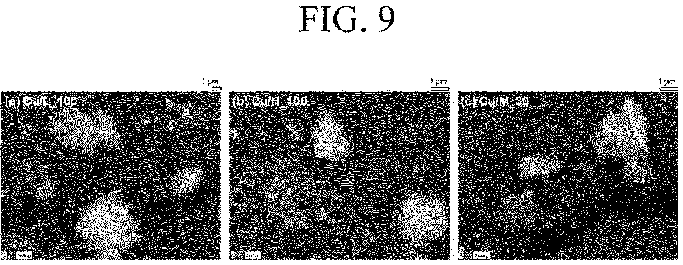

Therefore, as a result of comparing the Cu wt% values in Table 2 and Table 3 with the SEM/EDX mapping results in FIG. 9, it was confirmed that in the case of Cu/L_100 and Cu/H_100, all Cu species were inside the SPP and on the surface of the SPP (FIG. 9). In contrast, the Cu/M_30 contained 5.6 Cu wt%, which was greater than 3.5 Cu wt%, which was the value obtained from the SEM/EDX mapping.

In the SEM/EDX mapping, since the Cu species represented an intense red color, it can be seen that they were not homogeneously distributed on the particles (FIG. 9).

Table 2 below shows the results of elemental analysis measured from the EDX data of the H-type and Cu-impregnated SPP particles ("a" represents the EDX data of each sample, and "b" represents Cu wt% data of the copper impregnated SPP measured from the SEM/EDX mapping in FIG. 9).

Table 2

| Sample | Si/Al[a] | Na/Al[a] | Cu wt%[a] | Cu wt%[b] |
|---|---|---|---|---|
| L_100 | 60.9 ± 27.7 | 0.1 ± 0.2 | 0.1 ± 0.2 | - |
| H_100 | 82.0 ± 20.6 | 0.2 ± 0.2 | 0.2 ± 0.2 | - |
| M_30 | 23.8 ± 2.2 | 0.0 ± 0.0 | 0.1 ± 0.1 | - |
| Cu/L_100 | 155 ± 51.2 | 0.1 ± 0.2 | 3.3 ± 0.9 | 3.3 |
| Cu/H_100 | 59.3 ± 10.6 | 0.1 ± 0.1 | 2.7 ± 0.4 | 3.5 |
| Cu/M_30 | 22.0 ± 2.8 | 0.0 ± 0.0 | 5.6 ± 1.1 | 3.5 |

Table 3 below shows the elemental analysis results measured from the EDX data of the Na-type SPP particles ("a" represents the EDX data of each sample).

Table 3

| Sample | Si/Al[a] | Na/Al[a] |
|---|---|---|
| 100_E1_W1.0 | 81 ± 31 | 0.9 ± 0.4 |
| 100_E0_W1.0 | 217 ± 145 | 1.9 ± 1.9 |
| 100_E0_W0.5 | 51 ± 13 | 0.2 ± 0.3 |
| 50_E1_W1.0 | 64 ± 12 | 1.4 ± 0.3 |
| 50_E0_W1.0 | 31 ± 3 | 0.2 ± 0.1 |
| 50_E0_W0.5 | 86 ± 19 | 1.4 ± 1.0 |
| 30_E1_W1.0 | 4.1 ± 0.3 | 0.5 ± 0.0 |
| 30_E0_W1.0 | 25 ± 1 | 0.4 ± 0.0 |
| 30_E0_W0.5 | 23 ± 6 | 0.6 ± 0.3 |

**Example 8 Confirmation of crystallinity of H-type SPP particles and Cu-impregnated SPP particles**

To observe the nanosheet composition of the H-type SPP particles and the Cu-impregnated SPP particles, TEM analysis was performed.

As a result, it was confirmed that in the H-type SPP particles, nanosheets (L_100 and H_100) appeared, and in M_30, fragments or chopped nanosheets appeared (FIG. 7 (a1), (a2), and (a3)).

Therefore, it can be seen that even after ion exchange with protons, the nanosheet of SPP particles was preserved.

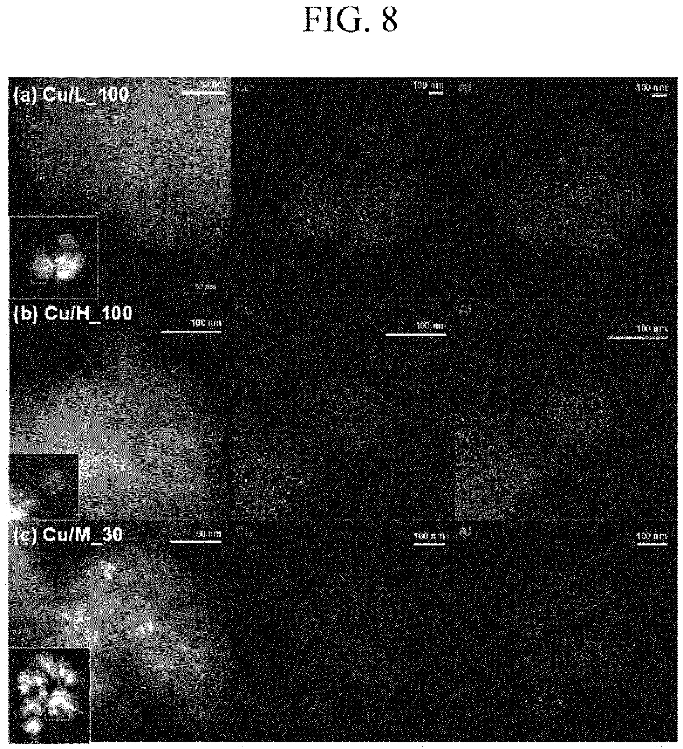

In the Cu-impregnated SPP particles, particles having a size of 20 nm were sporadically observed (indicated by black arrows in FIG. 7 (c1)), and particles having a size of 5 nm were also extensively observed and distributed well (FIG. 7 (c1), (c2), and (c3) and FIG. 8). The maximum wt% of Cu that may be ion exchanged in MFI zeolites with Si/Al ratios of 61, 82, and 24 were 0.8, 0.6, and 2.1, respectively. When the SPP particles of the present invention were Cu-impregnated, Cu of about 3 to 4 wt% was used.

Therefore, it can be seen that the small particles observed on the surface were CuO.

As a result of observing the nanosheet composition of the particles through the element mapping, it was observed that Cu atoms were uniformly and continuously distributed in the SPP particles (FIG. 8). Therefore, it can be seen that the Cu atoms existed in the form of cations on the surface of the SPP and inside the SPP.

To confirm the crystallinity of the H-type SPP particles and the Cu-impregnated SPP particles, the XRD analysis was performed.

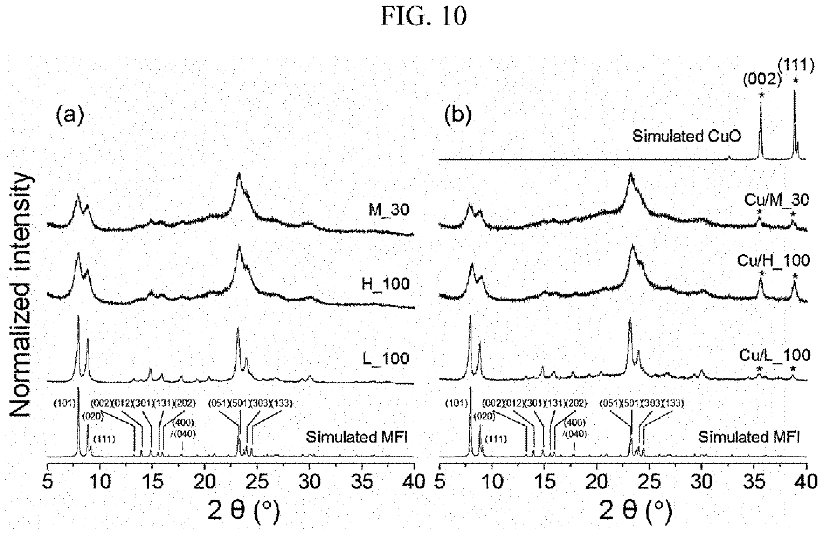

As a result, it was observed that all of the SPP particles ion-exchanged with protons maintained the existing MFI type zeolite structure of FIG. 4 through the XRD patterns of L_100, H_100, and M_30. In addition, it was confirmed that the Cu-impregnated SPP particles maintained the existing MFI zeolite structure (FIG. 10).

Therefore, it can be seen that the nanosheet of the SPP particles was preserved even after impregnation with Cu.

The Cu-impregnated sample showed the XRD peaks (about 36° and 39°) corresponding to CuO, and its size was confirmed to be 20 nm as calculated based on the Scherrer equation (FIG. 10).

Therefore, it can be seen that both CuO particles having sizes of 5 nm and 20 nm existed on the SPP surface.

In addition, assuming that the CuO particles are randomly oriented, an amount of CuO having the size of 20 nm among the Cu-impregnated SPP particles may be easily estimated in a corresponding XRD peak area. Specifically, as the relative areas of the XRD peaks of the (002) plane on the CuO, Cu/L_100, Cu/H_100, and Cu/M_30 were 0.6, 1, and 0.4, respectively. Considering that the impregnated Cu species were present in the form of the CuO, it can be seen that amounts of the CuO having the size of 5 nm were greater in the order of Cu/M_30, Cu/L_100, and Cu/H_100.

**Example 9 Analysis of pore structure of H-type SPP particles and Cu-impregnated SPP particles**

In order to analyze the pore structure of the H-type SPP particles and the Cu-impregnated SPP particles, the N2 physical adsorption isotherms were measured in the same manner as in Example 5, and the pore sizes and volumes were calculated.

In addition, in order to measure the surface area of each sample in a different scale, the Brunauer-Emmett-Teller (BET) surface area analysis and the modified t-plot method were used in the same manner as in Example 5.

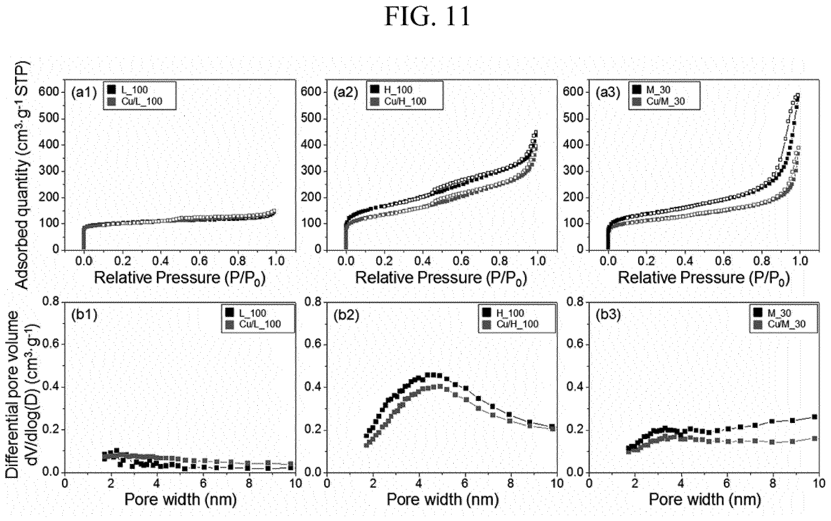

As a result, it was confirmed that the original properties of the H-type SPP particles were preserved after Cu-impregnation. The microporous surface area was not significantly changed after Cu-impregnation (90 to 105 % compared to the H-type SPP), and the mesopores and outer surface area were reduced (8 % for L_100, and 17 to 29 % for H_100 and M_30) (FIG. 11 and Table 4). The reduction of the mesopores was markedly achieved in the SPP particles with higher mesoporosity. This means that the 5 nm-sized CuO particles were present on the mesoporous surface of the SPP particles.

Table 4 shows the pore structure and acid titration results of the H-type and Cu-impregnated SPP particles ("c" represents all B acids located on the outer and mesoporous surfaces).

Table 4

| Sample | $S_{BET}$ (m²/g) | $S_{micro}$ (m²/g)[a] | $S_{meso+ext}$ (m²/g)[a] | $V_{micro}$ (cm³/g)[a] | $V_{2-10}$ (cm³/g)[b] | B site (μmol/g) | | L site (μmol/g) |
|---|---|---|---|---|---|---|---|---|
| | | | | | | Total | External[c] | |
| L_100 | 393 ± 0.3 | 267 | 126 | 0.105 | 0.027 | 45 | 40 | 19 |
| H_100 | 574 ± 1.2 | 162 | 412 | 0.082 | 0.244 | 109 | 100 | 38 |
| M_30 | 501 ± 0.2 | 164 | 337 | 0.068 | 0.139 | 191 | 121 | 31 |
| Cu/L_100 | 382 ± 0.1 | 266 | 116 | 0.105 | 0.043 | 21 | 8 | 145 |
| Cu/H_100 | 488 ± 0.2 | 145 | 343 | 0.062 | 0.206 | 74 | 58 | 173 |
| Cu/M_30 | 411 ± 0.2 | 172 | 238 | 0.071 | 0.103 | 122 | 99 | 338 |

In order to quantify the acid in the SPP particles, Fourier Transform Infrared Spectroscopy (FT-IR) was performed using pyridine (Py) and 2,6-di-tert-butylpyridine (dTBPy).

Self-pelletized samples in an in-situ FT-IR cell were activated under vacuum and at a temperature of 500 °C conditions for 6 hours. The sample was adsorbed by flowing saturated vapor of pyridine (Py; saturated vapor pressure of 2.80 kPa at a temperature of 25 °C) or 2,6-di-tert-butylpyridine (dTBPy; 0.034 kPa saturated vapor pressure at a temperature of 25 °C) at a He flow of 30 mL/min for 1 hour. Thereafter, after cooling it at a temperature of 150 °C, the weakly attached Py or dTBPy molecule was removed under vacuum for 60 minutes to obtain an FT-IR spectrum of the activated sample.

Thereafter, by using the wavenumbers of 1450 cm⁻¹ (Py), 1550 cm⁻¹ (Py), and 1615 cm⁻¹ (dTBPy) in the FT-IR spectrum, the concentrations of a total Lewis acid, a total Bronsted acid, and Bronsted acid on mesopores and the outer surface were respectively calculated. For convenience, the Lewis acid and the Bronsted acid were denoted as L site and B site, respectively.

As a result, it was confirmed that the B site of the H-type SPP particles (L_100, H_100, and M_30) was mainly located in the mesopores and outer surface area. Specifically, in the amount of the total B site, M_30 (191 $\mu$mol/g, mainly due to the lowest Si/Al ratio) was the greatest, and L_100 (45 $\mu$mol / g, mainly due to the lowest mesopores and outer surface area) was the least (Table 2).

After performing Cu-impregnation, the amount of the total B site decreased by 69 $\mu$mol/g in Cu/M_30, and it decreased by 24 $\mu$mol/g in Cu/L_100. This means that in the Cu-impregnated SPP particles, the amount of $Cu^{2+}$ ions was the greatest in Cu/M_30 and the least in Cu/L_100.

Therefore, when Cu was impregnated into the MFI zeolite structure, it can be seen that the SPP particles having a low Si/Al ratio were exchanged for large amounts of $Cu^{2+}$ ions.

In Cu/L_100 and Cu/H_100, a decrease in external B acid was observed along with a decrease in the total B site. This means that most of the $Cu^{2+}$ ions were located on the mesopores and outer surfaces. In Cu/M_30, the external B acid decreased.

Therefore, it can be seen that the $Cu^{2+}$ ions were located on the inner surface rather than the mesopores and outer surface.

**Example 10 Cold start test (CST) of H-type SPP particles**

The cold start test was performed by filling a sample of 0.06 g H-type SPP particles sieved in the range of 150 to 250 $\mu$m into a quartz tubular reactor (with an inner diameter of 6.9 mm and an outer diameter of 9.6 mm). The temperature was controlled using a temperature controller (UP35A, Yokogawa), and the flow speed of the supplied vapor was controlled using a mass flow controller (High Tech, Bronkhorst). The temperature was measured using a thermocouple under a quartz frit on which the sample was placed. The vapor was produced by injecting a predetermined amount of water into heated tubing. After passing through the reactor, a trap in which the cooling water (1 °C) was circulated removed the vapor in the outlet gas stream. After the trap, the outlet was connected to a mass spectrometer (Lab Questor-RGA, Bongil).

The calcined H-type SPP particles were activated at a temperature of 600 °C for 30 minutes under a He flow of 30 mL/min for 30 minutes. In the CST, a gas mixture of 100 mL/min containing 100 ppmv of propene, 100 ppm of toluene, 1 vol% of O2, 10 vol% of $H_2O$, and 560 ppmv of Ar in balance with He was supplied to the activated sample to become WHSV = 100,000 mLg$^{-1}$h$^{-1}$. In this supply, 560 ppmv of Ar was used as an internal standard for quantifying the molar composition of the gas outlet.

For the measurement of the CST, the reactor started at a temperature of 70 °C and was maintained for 5 minutes. Thereafter, the reactor was heated to a temperature of 600 °C at a heating speed of 50 °C/min, and maintained at the temperature of 600 °C for 30 minutes.

To check differences between the supplied components, signals corresponding to m/z = 40 for Ar, 42 for propene, 91 for toluene, 32 for O2, and 18 for $H_2O$ were detected, and in order to detect an oxidation process, signals corresponding to m/z = 28 for CO and 44 for $CO_2$ were monitored.

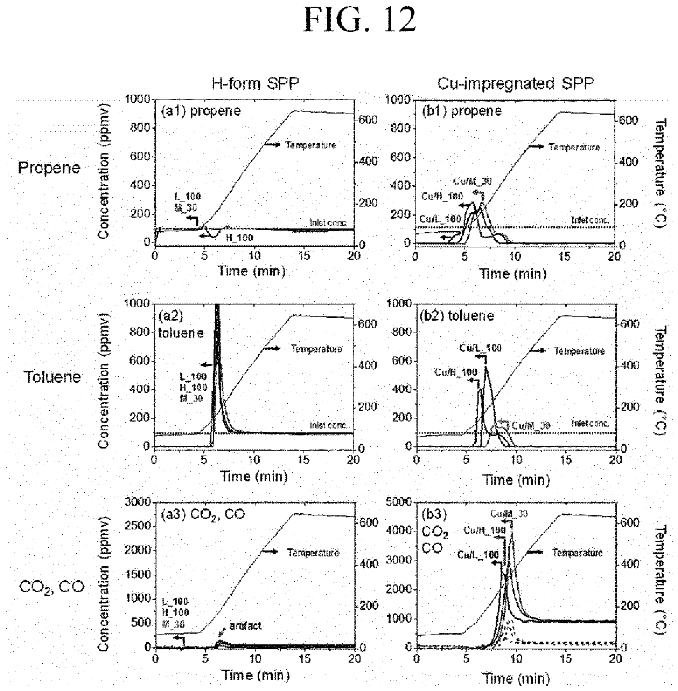

As a result, L_100, H_100, and M_30 showed almost the same emission profile (FIG. 12). Specifically, the H-type SPP initially hardly adsorbed propene (FIG. 12 (a1)). This was due to strong adsorption inhibition of the stream (supply of 10 vol%). In H_100, a portion of propene was consumed immediately after the temperature was increased, and then the supply concentration was recovered (FIG. 12 (a1)).

In contrast, toluene was adsorbed until the temperature increased to 140 °C, and then rapidly desorbed within 2 to 3 minutes (FIG. 12 (a2)). At a temperature of 300 °C or greater, propene and toluene were passed through without adsorption (FIG. 12 (a1) and (a2)). In addition, it was confirmed that $CO_2$ or CO was not generated.

Therefore, it can be seen that the oxidation of hydrocarbons (propene and toluene) did not occur.

In order to check the production of hydrocarbons produced by non-oxidative conversion of propene or toluene, signals corresponding to m/z = 56, 77, and 106 were observed.

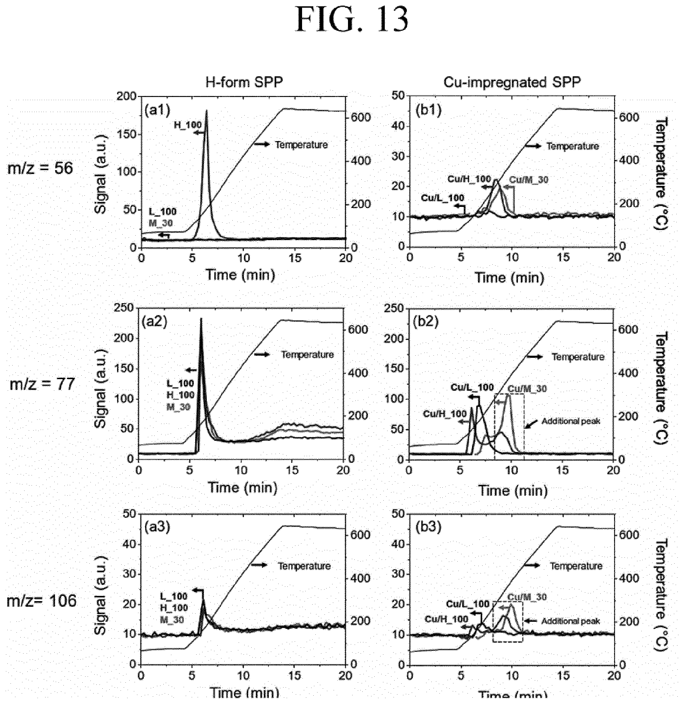

As a result, it was confirmed that different types of hydrocarbons were produced (FIG. 13 (a1), (a2), and (a3)). Specifically, m/z = 56 was 2-methylbutane related to propene oligomerization (FIG. 12 (a1)), and m/z = 77 (FIG. 13 (a2)) and m/z = 107 (FIG. 13 (a3)) were benzene and xylene isomers (including benzaldehyde) related to toluene disproportionation. Benzene and xylene isomers were produced in all the H-type SPP particles, while 2-methylbutane was produced only in H_100 (FIG. 13).

In addition, when an MS signal of m/z = 56 occurred, it was confirmed that propene emission decreased and then increased again, and toluene was desorbed at the same time (FIG. 12 (a1) and (a2)). In this case, it can be seen that the empty B site after toluene desorption rapidly adsorbed propene and caused catalysis (oligomerization).

Summarizing these features, it can be seen that the H-type SPPs (L_100, H_100, and M_30) did not have the ability to delay the emission of propene and toluene to the active temperatures of TWCs and oxidize hydrocarbons.

Therefore, it was confirmed that the H-type SPP particles were not suitable for use as an HC adsorbent in the cold start section.

**Example 11 Cold start test (CST) of Cu-impregnated SPP particles**

The CST performance of the Cu-impregnated SPP particles was confirmed in the same manner as in Example 10.

As a result, the Cu-impregnated SPP particles showed a different unique discharge profile compared to the H-type SPP particles (FIG. 12 (b1), (b2), and (b3)). The Cu-impregnated SPP particles were able to adsorb propene at an initial temperature of 70 °C, and Cu/M_30 showed the highest adsorption capacity. Cu/L_100 began to discharge propene before heating started, and Cu/M_30 desorbed propene at a temperature of a temperature of around 90 °C. Cu/H_100 showed intermediate performance between Cu/L_100 and Cu/M_30.

In addition, toluene was completely adsorbed, similarly to the H-type SPP particles (FIG. 12 (b2)). Desorption of toluene was most delayed at Cu/M_30 (toluene began to be discharged at 190 °C). This was because Cu/M_30 strongly adsorbs propene.

Cu/L_100 had improved adsorption capacity compared to L_100. Toluene desorption of Cu/H_100 was considerably reduced, but its desorption behavior was almost the same as that of H_100. Cu/L_100 desorbed most of the adsorbed toluene, while in Cu/H_100 and Cu/M_30, the amount of desorbed toluene was significantly reduced.

Therefore, it was confirmed that Cu/M_30 was an effective HC adsorbent because toluene was desorbed last and the amount of desorption decreased.

Reduced amounts of desorbed propene and toluene were correlated to $CO_2$ and CO (FIG. 12 (b3)) and to active conversion to other hydrocarbons (FIG. 13 (b1), (b2), and (b3)). The Cu-impregnated SPP was effectively oxidized to $CO_2$ or CO, and thus all the supplied components might be removed at a temperature of about 600 °C. Particularly, $CO_2$ and CO were generated at a temperature of 200 °C and increased in the order of Cu/L_100, Cu/H_100, and Cu/M_30 (at the temperatures of 300 °C, 350 °C, and 370 °C, respectively).

It was confirmed that some of the propenes detached from the Cu-impregnated SPP particles were converted to oligomers (m/z = 56) at a temperature of 300 °C, except Cu/L_100 (FIG. 13 (b1)). The inactivity of Cu/L_100 was because the amount of B site performing propene oligomerization was small, or the temperature at which propene was desorbed was low.

At the mass spectrum (MS) (m/z = 77 and 106) associated with toluene, disproportionation occurred at the same location where toluene was desorbed (FIG. 13 (b2) and (b3)). Since the toluene desorption was stronger in the order of Cu/H_100, Cu/L_100, and Cu/M_30, MS signals due to the toluene disproportionation also occurred in the same order. Further, in addition to the MS signals due to the toluene disproportionation, in Cu/H_100 and Cu/M_30, an unclear peak was observed at about 9 to 11 minutes (corresponding to temperatures of 320 to 370 °C). The unclear peak occurred as a side reaction between toluene molecules.

Therefore, it can be seen that Cu/M_30 could be used as an excellent HC adsorbent because it could adsorb both propene and toluene.

After completing the cold start test, in order to confirm the formation of coke, the tested sample was heated to 800 °C at a heating speed of 5 °C/min under an air flow of 100 mL/min and measured by a thermogravimetric analyzer (TGA, Q50, TA Instruments).

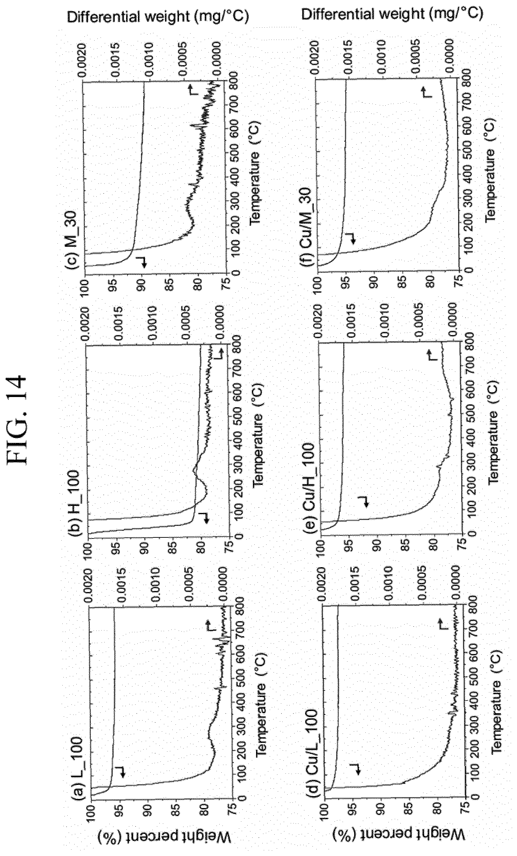

As a result, it was confirmed that almost no coke was formed (FIG. 14).

**Example 12 Confirmation of stability of Cu-impregnated SPP particles**

In order to check the stability of the Cu-impregnated SPP particles, the CST for Cu-impregnated SPP particles that were not hydrothermally treated or that were hydrothermally treated was continuously performed.

For the continuous CST performance measurement, while cooling the reactor from a temperature of 600 °C to a temperature of 70 °C, it was confirmed that no vapor was present in the flow reactor by flowing He at 100 mL/min for 6 hours. Cu/L_100, Cu/H_100, and Cu/M_30 were hydrothermally treated under He of 100 mL/min with 10 vol% of vapor for 24 hours at a temperature of 800 °C. The generated samples were indicated as Cu/L_100 HT, Cu/H_100 HT, and Cu/M_30 HT, wherein HT represented hydrothermal treatment.

The performance of cold-start test (CST) of the hydrothermally-treated Cu-impregnated SPP was observed under the same conditions described above.

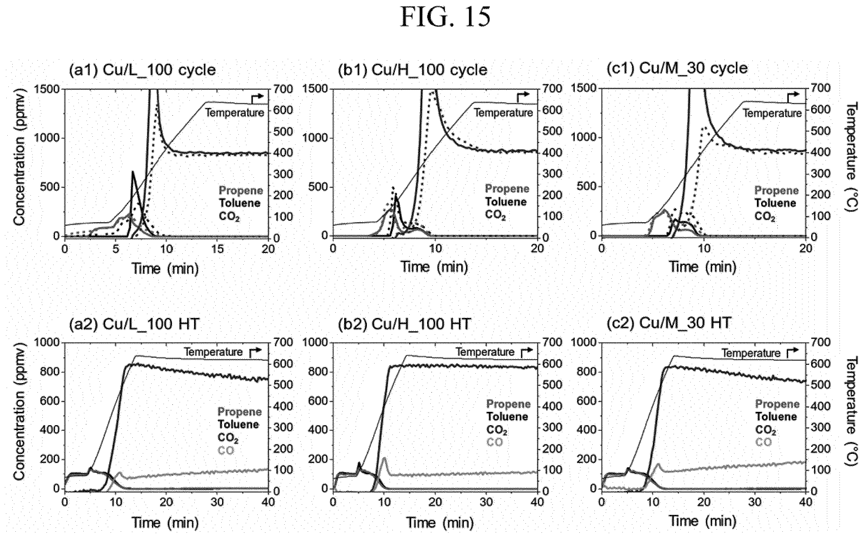

As a result, it was observed that Cu/H_100 and Cu/M_30 had similar propene and toluene emissions, but in the case of Cu/L_100, propene and toluene were discharged early in 3 cycles (FIG. 15 (a1), (b1), and (c1)).

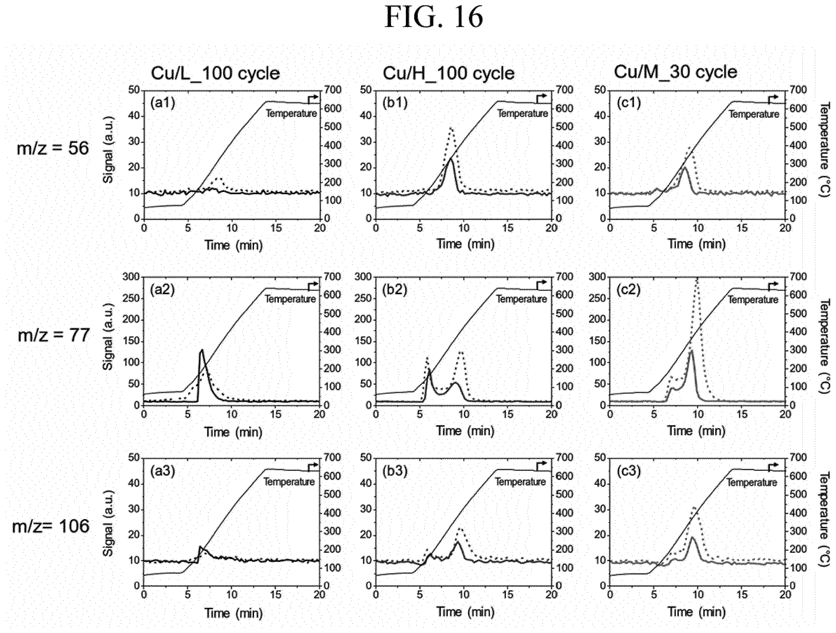

According to the by-product hydrocarbon profile (FIG. 16), propene and toluene were further converted to other hydrocarbons in 3 cycles. At the same time, $CO_2$ and CO generation time was delayed to less than 1 minute and the corresponding $CO_2$/CO generation amount was reduced.

In spite of the gradual performance deterioration according to the continuous test, the Cu-impregnated SPP particles had the performance of the HC adsorbent, but the hydrothermally-treated Cu-impregnated SPP had reduced adsorption capacity for propene and toluene.

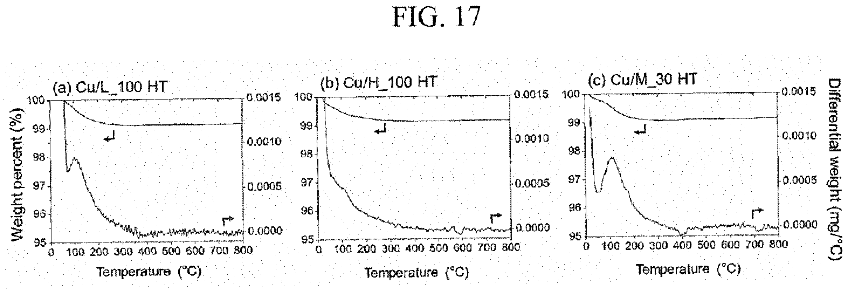

The oxidation temperature of the Cu-impregnated SPP HT was higher than that of the Cu-impregnated SPP, and this oxidation temperature was similar to that of bulk CuO (FIG. 15 (a2), (b2), and (c2)). As a result of analyzing the emission profiles (FIG. 15 (a2), (b2), and (c2)) and the TGA results (FIG. 17), it can be seen that hydrocarbons were converted to $CO_2$ or CO.

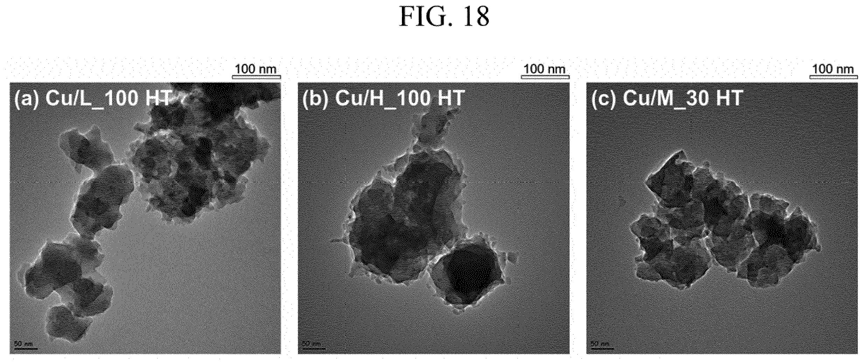

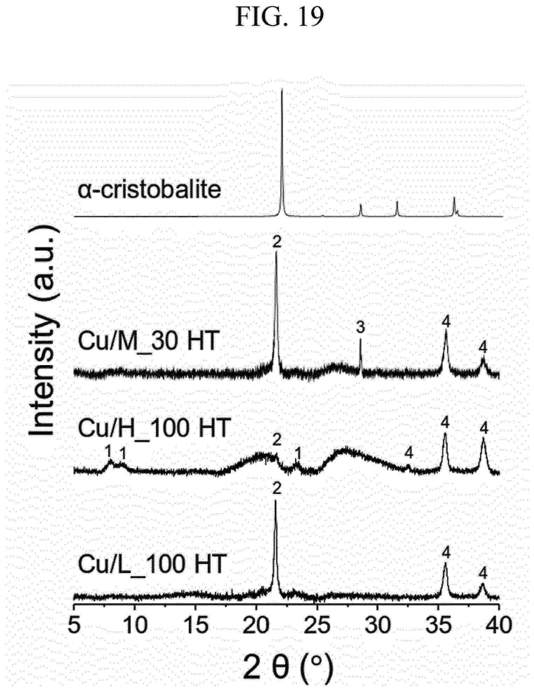

Therefore, through the TEM image and the XRD pattern (FIG. 19) of Cu-impregnated SPP HT (FIG. 18), after the hydrothermal treatment, it can be seen that Cu/H_100 maintained the MFI zeolite structure to some extent, but in Cu/M_30 and Cu/L_100, the MFI zeolite structure was converted into $\alpha$-cristobalite, and CuO particles were preserved.

Although specific embodiments of the present invention have been described in detail, it would be obvious to one of ordinary knowledge in the art that such specific technologies are no more than preferable examples, and the scope of the present invention is not limited thereby. Therefore, the substantial scope of the present invention is defined by the claims attached hereto and equivalents thereof.

**Claims**

1. A hydrocarbon adsorbent comprising:

   a metal cation and a metal oxide that are impregnated in zeolite particles,
   wherein the zeliote particles comprise regularly formed mesopores having a size of 2 to 10 nm.

2. The hydrocarbon adsorbent of claim 1, wherein the metal cation and the metal oxide act on adsorption and oxidation of hydrocarbons, respectively.

3. The hydrocarbon adsorbent of claim 1, wherein mesoporosity of the zeolite particles has a mesoporous volume of 0.01 $cm^3$/g or greater, the zeolite has a Si/Al molar ratio of 10 to 200, the metal cation is present in an amount of 3 to 85 % with respect to the maximum weight that is able to be impregnated in the zeolite, and the metal oxide is present in an amount of 15 to 97 % with respect to the maximum weight that is able to be impregnated in the zeolite.

4. The hydrocarbon adsorbent of claim 1, wherein the metal cation is selected from the group consisting of Al, Cr, Fe, Co, Ti, W, Si, Ir, Pt, Rd, Pd, Ru, Th, Ni, Cu, V, Au, Re, Zr, and Mo.

5. The hydrocarbon adsorbent of claim 1, wherein the metal oxide is selected from the group consisting of Al, Cr, Fe, Co, Ti, W, Si, Ir, Pt, Rd, Pd, Ru, Th, Ni, Cu, V, Au, Re, Zr, and Mo.

6. The hydrocarbon adsorbent of claim 1, wherein the zeolite is a self-pillared pentasil (SPP) zeolite.

7. A manufacturing method of a hydrocarbon adsorbent, comprising
   adding zeolite particles in which mesopores having a size of 2 to 10 nm are regularly formed to a metal-containing solution, and impregnating a metal cation and a metal oxide into the zeolite particles.

8. The manufacturing method of the hydrocarbon adsorbent of claim 7, wherein a synthetic precursor solution of the zeolite particles is formed to have a molar ratio of 1 $SiO_2$:x $Al_2O_3$:0.3 TBPOH:y $H_2O$:2x NaOH:z EtOH (x = 0.001 to 0.1, y= 0.1 to 9, z= 0 to 3.9).

9. The manufacturing method of the hydrocarbon adsorbent of claim 7, wherein the metal cation is selected from the group consisting of Al, Cr, Fe, Co, Ti, W, Si, Ir, Pt, Rd, Pd, Ru, Th, Ni, Cu, V, Au, Re, Zr, and Mo.

10. The manufacturing method of the hydrocarbon adsorbent of claim 7, wherein the metal oxide is selected from the group consisting of Al, Cr, Fe, Co, Ti, W, Si, Ir, Pt, Rd, Pd, Ru, Th, Ni, Cu, V, Au, Re, Zr, and Mo.

11. The manufacturing method of the hydrocarbon adsorbent of claim 8, wherein mesoporosity is changed according to a content of ethanol and water in the synthetic precursor solution of the zeolite particles.

12. The manufacturing method of the hydrocarbon adsorbent of claim 8, wherein a molar ratio of Si:Al in the synthetic precursor solution of the zeolite particles is 5 to 500.

**13.** A hydrocarbon adsorption method using the hydrocarbon adsorbent of claim 1.

**14.** The hydrocarbon adsorption method of claim 13, wherein the hydrocarbon is selected from the group consisting of propene, toluene, ethane, ethene, propane, benzene, xylene, ethylene, 2-methylbutane, formaldehyde, styrene, and acetaldehyde.

# FIG. 1

# FIG. 2

# FIG. 3

FIG. 4

EP 3 733 280 A1

# FIG. 5

FIG. 6

# FIG. 7

# FIG. 8

# FIG. 9

(a) Cu/L_100

(b) Cu/H_100

(c) Cu/M_30

FIG. 10

EP 3 733 280 A1

FIG. 11

EP 3 733 280 A1

# FIG. 12

# FIG. 13

FIG. 14

(a) L_100

(b) H_100

(c) M_30

(d) Cu/L_100

(e) Cu/H_100

(f) Cu/M_30

FIG. 15

(a1) Cu/L_100 cycle

(b1) Cu/H_100 cycle

(c1) Cu/M_30 cycle

(a2) Cu/L_100 HT

(b2) Cu/H_100 HT

(c2) Cu/M_30 HT

# FIG. 16

## FIG. 17

(a) Cu/L_100 HT

(b) Cu/H_100 HT

(c) Cu/M_30 HT

FIG. 18

(a) Cu/L_100 HT    (b) Cu/H_100 HT    (c) Cu/M_30 HT

FIG. 19

## INTERNATIONAL SEARCH REPORT

| International application No. |
| --- |
| **PCT/KR2018/016590** |

### A. CLASSIFICATION OF SUBJECT MATTER

*B01J 20/32(2006.01)i, B01J 20/28(2006.01)i, B01J 20/18(2006.01)i, B01D 53/04(2006.01)i*

According to International Patent Classification (IPC) or to both national classification and IPC

### B. FIELDS SEARCHED

Minimum documentation searched (classification system followed by classification symbols)

B01J 20/32; B01D 53/02; B01J 2/08; B01J 20/08; B01J 20/30; B01J 23/44; B01J 29/035; B01J 29/068; C01B 39/48; B01J 20/28; B01J 20/18; B01D 53/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: hydrocarbon adsorbent, meso pore, zeolite particle, metal cation, metallic oxide, impregnation

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2012-0084757 A (BASF CORPORATION) 30 July 2012<br>See claims 1-3, 13, 19; paragraphs [0015], [0028], [0033]. | 1-14 |
| Y | KR 10-2010-0088837 A (KOREA ADVANCED INSTITUTE OF SCIENCE AND TECHNOLOGY) 11 August 2010<br>See claims 1, 4-6, 10. | 1-14 |
| Y | US 2017-0240431 A1 (EXXONMOBIL RESEARCH AND ENGINEERING COMPANY) 24 August 2017<br>See claims 1-19; example 1 . | 8,11-12 |
| A | ZHANG, Xueyi et al., "SYNTHESIS OF SELF-PILLARED ZEOLITE NANOSHEETS BY REOETITIVE BRANCHING", SCINECE, 2012, no. 336, pages 1684-1687<br>See the entire document. | 1-14 |
| A | KR 10-1451902 B1 (KOREA ADVANCED INSTITUTE OF SCIENCE AND TECHNOLOGY) 22 October 2014<br>See the entire document. | 1-14 |

☐ Further documents are listed in the continuation of Box C. ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 03 APRIL 2019 (03.04.2019) | **03 APRIL 2019 (03.04.2019)** |

| Name and mailing address of the ISA/KR | Authorized officer |
| --- | --- |
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2018/016590**

| Patent document cited in search report | Publication date | Patent family member | Publication date |
|---|---|---|---|
| KR 10-2012-0084757 A | 30/07/2012 | CN 102639228 A | 15/08/2012 |
| | | CN 102639228 B | 20/01/2016 |
| | | EP 2485834 A2 | 15/08/2012 |
| | | EP 2485834 B1 | 24/08/2016 |
| | | EP 3112019 A1 | 04/01/2017 |
| | | JP 2013-506554 A | 28/02/2013 |
| | | JP 5827231 B2 | 02/12/2015 |
| | | KR 10-1854924 B1 | 04/05/2018 |
| | | US 2011-0079145 A1 | 07/04/2011 |
| | | US 8147588 B2 | 03/04/2012 |
| | | WO 2011-043974 A2 | 14/04/2011 |
| KR 10-2010-0088837 A | 11/08/2010 | KR 10-1062666 B1 | 06/09/2011 |
| US 2017-0240431 A1 | 24/08/2017 | CN 108602683 A | 28/09/2018 |
| | | EP 3416915 A1 | 26/12/2018 |
| | | KR 10-2018-0116336 A | 24/10/2018 |
| | | WO 2017-142666 A1 | 24/08/2017 |
| KR 10-1451902 B1 | 22/10/2014 | KR 10-2014-0067323 A | 05/06/2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170183959

**Non-patent literature cited in the description**

- **M.S. REITER et al.** *Transport. Res. Part D-Transport. Environ.,* 2016, vol. 43, 123-132
- **K. RAVINDRA et al.** *Atmos. Environ.,* 2008, vol. 42, 2895-2921
- **GC KOLTSAKIS et al.** *Prog. Energy Combust. Sci.,* 1997, vol. 23, 1-39
- **M. NAVLANI-GARCIA et al.** *Environ. Sci. Technol.,* 2013, vol. 47, 5851-5857
- **H.W. JEN et al.** *Catal. Lett.,* 1994, vol. 26, 217-225
- **B. PUERTOLAS et al.** *Chem. Commun.,* 2012, vol. 48, 6571-6573
- **DJ PARRILLO et al.** *J. Catal.,* 1993, vol. 142, 708-718
- **H. KIM et al.** *Catal. Tod,* 2017